# EUROPÄISCHE PATENTANMELDUNG

(11) **EP 2 960 730 A1**
(43) Veröffentlichungstag der Anmeldung: **30.12.2015**
(21) Anmeldenummer: 14173889.8
(22) Anmeldetag: 25.06.2014
(51) Int. Cl.: G05B 19/042, H02J 1/00

(54) **Verfahren zum Konfigurieren eines Schaltnetzteils**

(71) Anmelder: Siemens Aktiengesellschaft, 80333 München (DE)
(72) Erfinder: Hublitz, Dieter, 97464 Niederwerrn (DE); Schedlberger, Robert, 4283 Bad Zell (AT); Vucic, Miroslav, 1090 Wien (AT)
(74) Vertreter: Maier, Daniel Oliver

(57) **Zusammenfassung**

Die Erfindung betrifft ein Verfahren zum Konfigurieren eines Schaltnetzteils (1) mit mehreren Ausgangskanälen (3, 4, 5, 6), wobei das Schaltnetzteil (1) für jeden Ausgangskanal (3, 4, 5, 6) zumindest ein Bedienelement (8, 9) umfasst, mittels dem für den zugeordneten Ausgangskanals (3, 4, 5, 6) ein Betriebsparameter manuell eingestellt wird. Dabei umfasst das Schaltnetzteil (1) eine Schnittstelle (11) zur Fernkonfiguration, wobei der jeweilige manuell eingestellte Betriebsparameter mittels Schnittstelle (11) an eine ferne Konfigurationseinheit (13) ausgegeben wird und wobei der jeweilige manuell eingestellte Betriebsparameter in eine mittels Konfigurationseinheit (13) festgelegte Konfiguration des Schaltnetzteils (1) übernommen wird. In einem manuellen Mode eingestellte Betriebsparameter werden in die Fernkonfiguration übernommen und kommen beim nächsten Start des Schaltnetzteils (1) in einem Remote-Mode zur Anwendung.

## Beschreibung

Die Erfindung betrifft ein Verfahren zum Konfigurieren eines Schaltnetzteils mit mehreren Ausgangskanälen, wobei das Schaltnetzteil für jeden Ausgangskanal zumindest ein Bedienelement umfasst, mittels dem für den zugeordneten Ausgangskanals ein Betriebsparameter manuell eingestellt wird. Des Weiteren betrifft die Erfindung ein entsprechendes Schaltnetzteils.

Schaltnetzteile mit mehreren Ausgangskanälen werden genutzt, um gleichzeitig unterschiedliche Verbraucher zu versorgen. Oftmals ist dabei jeder Ausgangskanal mittels eines Potentiometers oder eines DIP-Schalters separat einstellbar.

Bei Industrieanwendungen im Automatisierungsbereich werden an Schaltnetzteile besondere Anforderungen gestellt. Beispielsweise ist eine flexible Konfigurierung erforderlich, um auch nach Umbauten einer Industrieanlage eine zuverlässige Versorgung mit Strom sicherzustellen.

Es liegt der Erfindung deshalb die Aufgabe zugrunde, für ein Verfahren der eingangs genannten Art eine Verbesserung gegenüber dem Stand der Technik anzugeben, insbesondere für den Einsatz in Industrieanlagen.

Erfindungsgemäß wird diese Aufgabe gelöst durch ein Verfahren gemäß Anspruch 1 und ein Schaltnetzteil gemäß Anspruch 6. Verbesserungen sind abhängigen Ansprüchen entnehmbar.

Dabei umfasst das Schaltnetzteil eine Schnittstelle zur Fernkonfiguration, wobei der jeweilige manuell eingestellte Betriebsparameter mittels Schnittstelle an eine ferne Konfigurationseinheit ausgegeben wird und wobei der jeweilige manuell eingestellte Betriebsparameter in eine mittels Konfigurationseinheit festgelegte Konfiguration des Schaltnetzteils übernommen wird. In einem manuellen Mode eingestellte Betriebsparameter werden in die Fernkonfiguration übernommen und kommen beim nächsten Start des Schaltnetzteils in einem Remote-Mode zur Anwendung.

Mit diesem Verfahren ist auch die Möglichkeit geschaffen, manuell eingestellte Betriebsparameter in einer Konfigurationssoftware zu nutzen, beispielsweise um Auswertungen durchzuführen oder um Änderungen der Konfiguration vorzunehmen. Das Schaltnetzteil umfasst dabei eine Diagnoseeinheit, um die manuell eingestellten Betriebsparameter bereitzustellen. Insbesondere bei der Fernkonfiguration mehrerer Schaltnetzteile mittels einer zentralen Konfigurationseinheit ist dieses Verfahren vorteilhaft, weil alle manuell eingegebenen Betriebsparameter in der Konfigurationseinheit sofort auf Knopfdruck verfügbar sind.

In einer vorteilhaften Ausprägung der Erfindung ist die Schnittstelle als Webschnittstelle ausgebildet, wobei die ferne Konfigurationseinheit einen Webbrowser umfasst, wobei der jeweilige Betriebsparameter in einer Ausgabemaske des Webbrowsers angezeigt wird und wobei der jeweilige Betriebsparameter mittels eines Webbrowser-Steuerelements in eine Konfiguration des Schaltnetzteils übernommen wird. Die Konfigurationseinheit ist dann ein Computer, auf dem ein Webbrowser installiert ist und der über ein geeignetes Kommunikationsnetzwerk mit dem Schaltnetzteil verbunden ist. Abgesehen vom Webbrowser ist dann keine weitere Software notwendig, um eine Fernkonfiguration durchzuführen.

Von Vorteil ist es, wenn für jeden Ausgangskanal als Betriebsparameter eine Ausgangsspannung eingestellt wird. Das Schaltnetzteil ist dann flexibel an verschiedene Anforderungen innerhalb einer Industrieanlage anpassbar.

Des Weiteren ist es von Vorteil, wenn für jeden Ausgangskanal als Betriebsparameter ein Stromschwellwert eingestellt wird, bei dessen Erreichung der jeweilige Ausgangskanal in einen Strombegrenzungsmodus übergeht. Das Schaltnetzteil ist dann zur Überbrückung kurzer Überlasten geeignet. Beispielsweise wird bei einem Einschaltvorgang der Ausgangsstrom so lange begrenzt, bis angeschlossene Kapazitäten aufgeladen sind.

Dabei ist es vorteilhaft, wenn für jeden Ausgangskanal als Betriebsparameter eine Begrenzungsdauer eingestellt wird und wenn nach Ablauf der jeweiligen Begrenzungsdauer der zugeordnete Ausgangskanal abschaltet wird, um bei einem auftretenden Fehler Schäden an einer Anlage zu vermeiden. Zum Beispiel erfolgt in einem Kurzschlussfall eine Abschaltung nach Ablauf der Begrenzungsdauer.

Ein erfindungsgemäßes Schaltnetzteil umfasst für jeden Ausgangskanal zumindest ein Bedienelement, mittels dem für den zugeordneten Ausgangskanal ein Betriebsparameter manuell einstellbar ist, wobei das Schaltnetzteil eine Diagnoseeinheit zur Bereitstellung der eingestellten Betriebsparameter und eine Schnittstelle zur Fernkonfiguration umfasst und zur Durchführung eines der genannten Verfahren eingerichtet ist. Ein Erfassen der eingestellten Betriebsparameter mittels eines externen Messgeräts ist somit nicht erforderlich.

Dabei ist es günstig, wenn das Schaltnetzteil einen Real-Time-Ethernet-Controller umfasst, welcher mit einer Steuerung des Schaltnetzteils verbunden und als Web-Server eingerichtet ist. Konfigurationsänderungen sind damit sofort wirksam, weil die Datenübertragung zwischen Schaltnetzteil und ferner Konfigurationseinheit in Echtzeit erfolgt.

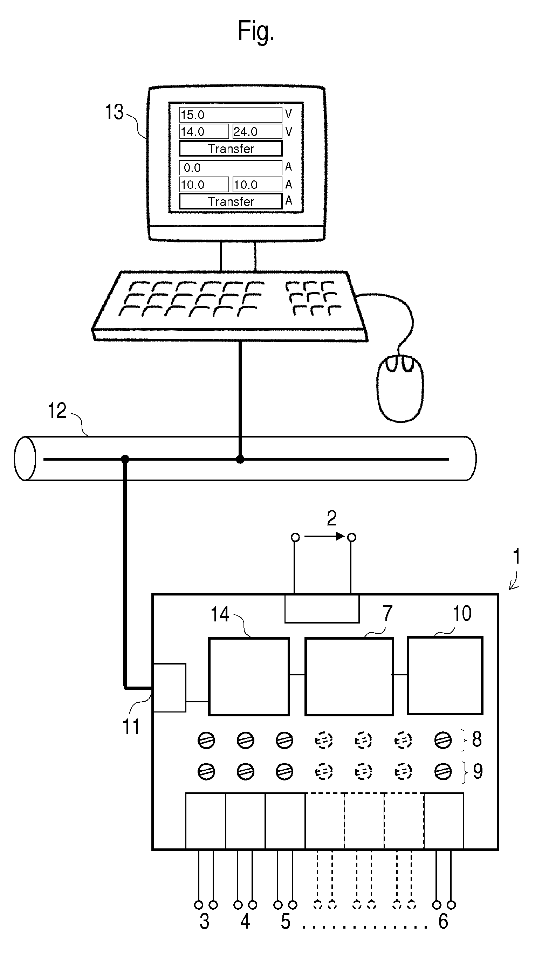

Die Erfindung wird nachfolgend in beispielhafter Weise unter Bezugnahme auf die beigefügte Figur erläutert.

Diese zeigt ein Schaltnetzteil 1, welches an eine Eingangsspannung 2 angeschlossen ist und mehrere Ausgangskanäle 3, 4, 5, 6 aufweist. An jedem Ausgangskanal 3, 4, 5, 6 liegt eine jeweilige Ausgangsspannung an.

Angesteuert ist jeder Ausgangskanal 3, 4, 5, 6 mittels einer Steuerung 7. Die nicht im Detail dargestellte Leistungsschaltung des Schaltnetzteils 1 besteht beispielsweise aus einem eingangsseitigen Gleichrichter, einem Zwischenkreis und mehreren Wandlern. Beispielsweise sind an den Zwischenkreis mehrere Resonanzwandler angeschlossen, deren Leistungsschalter mittels der Steuerung 7 angesteuert sind.

Durch ein getaktetes Ein- und Ausschalten der Leistungsschalter wird eine Zwischenkreisspannung in eine am jeweiligen Ausgangskanal anliegende Ausgangsspannung umgewandelt. In der Steuerung 7 sind zu diesem Zweck entsprechende Regelungsalgorithmen eingerichtet. Die einzelnen Ausgangsspannungen können dabei unterschiedlich oder gleich groß sein. Zudem besteht die Möglichkeit, zwei oder mehrere Kanäle 3, 4, 5, 6 parallel zu schalten, um eine höhere Ausgangsleistung bereitzustellen.

Das Schaltnetzteil weist einen manuellen Mode und einen Remote-Mode auf. Um für jeden Ausgangskanal 3, 4, 5, 6 im manuellen Mode die gewünschte Ausgangsspannung einzustellen, sind am Gerät selbst geeignete Bedienelemente 8, 9 vorhanden. Im einfachsten Fall ist das jeweils eine Stellschraube eines Potentiometers oder ein DIP-Schalter.

Pro Ausgangskanal 3, 4, 5, 6 wird beispielsweise mittels eines ersten Bedienelements 8 die jeweilige Ausgangsspannung eingestellt. Das jeweilige Bedienelement 8 wird dabei so lange betätigt, bis am zugeordneten Ausgang die gewünschte Ausgangsspannung anliegt.

Mittels weiterer Bedienelemente 9 ist eine jeweilige Strombegrenzung einstellbar. Im einfachsten Fall wird pro Ausgangskanal 3, 4, 5, 6 ein Stromschwellwert eingestellt, bei dessen Erreichung eine Strombegrenzung aktiv wird. Weitere Einstellmöglichkeiten betreffen eine Begrenzungsdauer oder eine zweistufige Begrenzung. Für jeden Ausgangskanal 3, 4, 5, 6 sind dann mehrere Bedienelemente 9 vorgesehen. Eine zweistufige Begrenzung sieht vor, dass bei Erreichen eines ersten Stromgrenzwertes für eine vorgegebene Zeitspanne ein Betrieb im Überlastbereich möglich ist, beispielsweise um ausgangsseitige Kapazitäten aufzuladen. Erst beim Erreichen eines zweiten Stromgrenzwertes wird der Strom begrenzt, wobei wieder eine maximale Begrenzungsdauer eingestellt ist.

Um die eingestellten Betriebsparameter auslesen zu können, umfasst das Schaltnetzteil 1 eine Diagnoseeinheit 10, die beispielsweise mit der Steuerung 7 verbunden ist. Diese erfasst für jeden Ausgangskanal 3, 4, 5, 6 zum Beispiel den momentanen Istwert und den Sollwert der Ausgangsspannung, den maximalen Ausgangsstrom sowie die momentanen Istwert und den Schwellwert des Ausgangsstorms, ab dem eine Strombegrenzung aktiv wird. Die Diagnoseeinheit 10 umfasst dafür geeignete Messelemente wie Stromwandler, Shuntwiderstände und dergleichen.

Die Handhabung des Schaltnetzteils 1 wird auf diese Weise wesentlich vereinfacht, weil manuell vorgenommene Einstellungen nicht mehr extern gemessen werden müssen, was insbesondere bei Stromlimits schwierig ist.

Erfindungsgemäß umfasst das Schaltnetzteil 1 eine Schnittstelle 11 zur Fernkonfiguration, um Einstellungen für den Remote-Mode vornehmen zu können. Dabei handelt es sich zum Beispiel um eine Webschnittstelle, mittels derer das Schaltnetzteil 1 über ein Kommunikationsnetzwerk 12 mit einer fernen Konfigurationseinheit 13 verbunden ist. Auf diese Weise sind mehrere Schaltnetzteile 1 innerhalb einer Industrieanlage zentral konfigurierbar.

Dabei umfasst das Schaltnetzteil 1 beispielsweise einen Real-Time-Ethernet-Controller 14, der einerseits mit der Steuerung 7 und andererseits mit der Schnittstelle 11 verbunden ist. Der Real-Time-Ethernet-Controller 14 ist als Web-Server eingerichtet. Auf diese Weise ist sichergestellt, dass die Einstellungen der Ausgangsspannungen und der Stromwerte bzw. Zeitspannen in Echtzeit über das Kommunikationsnetzwerk 12 mittels der Konfigurationseinheit 13 vorgenommen werden können. Die Konfigurationseinheit 13 ist beispielsweise ein Computer, auf dem ein Web-Browser installiert ist. Dabei ist es wichtig, dass mittels der Bedienelemente 8, 9 vorgenommene manuelle Änderungen auch in Echtzeit in einer Ansicht des Web-Browsers angezeigt werden.

Am Web-Browser ist zum Beispiel eine Maske mit mehreren Eingabefeldern und Steuerelementen sichtbar. Für jeden Ausgangskanal 3, 4, 5, 6 wird die momentane Ausgangsspannung angezeigt. In zwei weiteren Feldern werden ein manuell eingestellter und ein mittels Fernkonfiguration eingestellter Sollwert für die Ausgangsspannung angegeben. Mittels eines Browser-Steuerelements "Transfer" wird der manuell eingestellte Sollwert als Sollwert des Remote-Mode übernommen.

Dasselbe ist für den Strom des jeweiligen Ausgangskanals 3, 4, 5, 6 vorgesehen. Hier wird in einem ersten Feld ein momentaner Ausgangsstrom (Istwert) angezeigt. In zwei weiteren Feldern werden ein manuell eingestellter und ein mittels Fernkonfiguration eingestellter Ansprechschwellwert für den Ausgangsstrom angegeben. Eine Übernahme des manuell eingestellten Schwellwertes erfolgt wieder mittels eines Browser-Steuerelements "Transfer".

Optional wird im Web-Browser auch der Betriebszustand des jeweiligen Ausgangskanals 3, 4, 5, 6 bzw. des Schaltnetzteils 1 angezeigt, zum Beispiel, ob ein jeweiliger Ausgangskanal zugeschaltet ist.

Eine zeitaufwendige manuelle Eingabe der Einstellwerte entfällt auf diese Weise, wodurch eine Inbetriebnahme oder Anpassung des Schaltnetzteils 1 rasch durchführbar ist.

Das Kommunikationsnetzwerk 12 ist beispielsweise ein Ethernet oder ein sogenanntes PROFINET. Letzteres nutzt TCP/IP und IT-Standards, ist Echtzeit-Ethernet-fähig und ermöglicht die Integration zahlreicher Feldbus-Systeme.

Ein wesentlicher Vorteil der Erfindung liegt darin, dass von einer zentralen Stelle aus auf einfache Weise und in Echtzeit komplexe Einstellungen der mehrkanaligen Stromversorgung 1 vorgenommen werden können, wobei zuvor manuell eingestellte Betriebsparameter sofort zentral verfügbar sind. Die manuell vorgenommenen Einstellungen eines Schaltnetzteils 1 sind auf diese Weise ohne Zwischenschritte auf andere am Kommunikationsnetzwerk 12 angeschlossene Schaltnetzteile 1 übertragbar. Das erleichtert eine Inbetriebnahme einer Industrieanlage mit mehreren Schaltnetzteilen 1 erheblich.

## Patentansprüche

1. Verfahren zum Konfigurieren eines Schaltnetzteils (1) mit mehreren Ausgangskanälen (3, 4, 5, 6), wobei das Schaltnetzteil (1) für jeden Ausgangskanal (3, 4, 5, 6) zumindest ein Bedienelement (8, 9) umfasst, mittels dem für den zugeordneten Ausgangskanals (3, 4, 5, 6) ein Betriebsparameter manuell eingestellt wird, **dadurch gekennzeichnet, dass** das Schaltnetzteil (1) eine Schnittstelle (11) zur Fernkonfiguration umfasst, dass der jeweilige manuell eingestellte Betriebsparameter mittels Schnittstelle (11) an eine ferne Konfigurationseinheit (13) ausgegeben wird und dass der jeweilige manuell eingestellte Betriebsparameter in eine mittels Konfigurationseinheit (13) festgelegte Konfiguration des Schaltnetzteils (1) übernommen wird.

2. Verfahren nach Anspruch 1, **dadurch gekennzeichnet, dass** die Schnittstelle (11) als Webschnittstelle ausgebildet ist und dass die ferne Konfigurationseinheit (13) einen Webbrowser umfasst, dass der jeweilige Betriebsparameter in einer Ausgabemaske des Webbrowsers angezeigt wird und dass der jeweilige Betriebsparameter mittels eines Webbrowser-Steuerelements in eine Konfiguration des Schaltnetzteils (1) übernommen wird.

3. Verfahren nach Anspruch 1 oder 2, **dadurch gekennzeichnet, dass** für jeden Ausgangskanal (3, 4, 5, 6) als Betriebsparameter eine Ausgangsspannung eingestellt wird.

4. Verfahren nach einem der Ansprüche 1 bis 3, **dadurch gekennzeichnet, dass** für jeden Ausgangskanal (3, 4, 5, 6) als Betriebsparameter ein Stromschwellwert eingestellt wird, bei dessen Erreichung der jeweilige Ausgangskanal (3, 4, 5, 6) in einen Strombegrenzungsmodus übergeht.

5. Verfahren nach Anspruch 4, **dadurch gekennzeichnet, dass** für jeden Ausgangskanal (3, 4, 5, 6) als Betriebsparameter eine Begrenzungsdauer eingestellt wird und dass nach Ablauf der jeweiligen Begrenzungsdauer der zugeordnete Ausgangskanal (3, 4, 5, 6) abschaltet wird.

6. Schaltnetzteil (1) mit mehreren Ausgangskanälen (3, 4, 5, 6), wobei das Schaltnetzteil für jeden Ausgangskanal (3, 4, 5, 6) zumindest ein Bedienelement (8, 9) umfasst, mittels dem für den zugeordneten Ausgangskanal (3, 4, 5, 6) ein Betriebsparameter manuell einstellbar ist, **dadurch gekennzeichnet, dass** das Schaltnetzteil (1) eine Diagnoseeinheit (10) zur Bereitstellung der eingestellten Betriebsparameter und eine Schnittstelle (11) zur Fernkonfiguration umfasst und dass das Schaltnetzteil (1) zur Durchführung eines Verfahrens nach einem der Ansprüche 1 bis 5 eingerichtet ist.

7. Schaltnetzteil (1) nach Anspruch 6, **dadurch gekennzeichnet, dass** das Schaltnetzteil (1) einen Real-Time-Ethernet-Controller umfasst, welcher mit einer Steuerung (7) des Schaltnetzteils (1) verbunden und als Web-Server eingerichtet ist.
